# EUROPÄISCHE PATENTSCHRIFT

(11) **EP 1 160 006 B1**
(45) Veröffentlichungstag und Bekanntmachung des Hinweises auf die Patenterteilung: **22.04.2009**
(21) Anmeldenummer: 01113254.5
(22) Anmeldetag: 31.05.2001
(51) Int. Cl.: B01J 2/06, F25C 1/00, A23L 3/375

(54) **Vorrichtung und Verfahren zum Pelletieren einer flüssigen oder pastösen Masse unter Einsatz eines Kühlstroms**
Device and process for pelletizing a liquid or paste-like mass using a cooling liquid stream
Dispositif et procédé de granulation d'une matière liquide ou pateuse avec un courant de liquide de refroidissement

(30) Priorität: 31.05.2000 DE 10026854
(43) Veröffentlichungstag der Anmeldung: 05.12.2001
(73) Patentinhaber: Air Liquide Deutschland GmbH, 40235 Düsseldorf (DE); Messer Group GmbH, 65843 Sulzbach (DE)
(72) Erfinder: Moser, Friedrich, 47167 Duisburg (DE); Hoffmanns, Wolfgang, 47877 Willich (DE); Kosock, Stefan, 47805 Krefeld (DE)
(74) Vertreter: Kahlhöfer, Hermann

(56) Entgegenhaltungen:
- DE-A- 19 837 600
- US-A- 3 228 838
- US-A- 5 881 561

## Beschreibung

Die Erfindung betrifft eine Vorrichtung zum Pelletieren einer flüssigen oder pastösen Masse unter Einsatz eines Kühlstroms aus flüssigem Kühlmittel, mit einer Strömungserzeugungseinrichtung zur Erzeugung des Kühlstroms, mit einer Eintragvorrichtung zum Einbringen der Masse in den Kühlstrom im Bereich einer Eintropfstelle unter Bildung zu gefrierender Pellets, mit mindestens einem Leitkörper zur Führung des die Pellets enthaltenden Kühlstroms zwischen der Eintropfstelle und einer Transportvorrichtung für die Pellets, und mit einem Kühlmittelbad für das flüssige Kühlmittel.

Weiterhin betrifft die Erfindung ein Verfahren zur Herstellung von Pellets aus einer flüssigen oder pastösen Masse, indem ein mittels mindestens eines Leitkörpers geführter Kühlstrom eines flüssigen Kühlmittels erzeugt, die Masse in den Kühlstrom eingebracht und darin unter Bildung von Pellets teilweise ausgefroren wird, und die Pellets anschließend vom Leitkörper entfernt, einer Transportvorrichtung zugeführt und darauf ausgefroren werden.

Vorrichtung und Verfahren der eingangs genannten Gattung sind aus der DE-A 198 37 600 bekannt. Darin wird vorgeschlagen, eine pastöse Masse über eine Tropfeinrichtung in eine nach oben offene, geneigte Fließrinne, in der ein laminarer Strom aus flüssigem Stickstoff fließt, einzutropfen. In der Fließrinne werden die Tropfen im Stickstoffstrom unter Bildung von Pellets angefroren und anschließend an einer Übergabestelle einem von einer Wärmeisolierung umgebenden, gelochten oder gitterförmigen Förderband zugeführt. Durch die Öffnungen des Förderbandes fließt der flüssige Stickstoff über eine unterhalb des Förderbandes verlaufende Rückführrinne in einen Sammelbehälter ab, von wo er mittels einer Pumpe wieder auf die Fließrinne gepumpt wird. Die teilweise ausgefrorenen Pellets werden mittels des Förderbandes einem Gaskanal zugeführt und darin durch die Abluft des flüssigen Stickstoffes vollständig ausgefroren und gelangen anschließend zu einem Sammelbehälter.

Die Pellets werden in einem Strom aus flüssigem Stickstoff angefroren, so dass sie eine gewisse Mindestfestigkeit aufweisen, bevor sie auf das Förderband gelangen. Die sich einstellende Festigkeit hängt unter anderem von der Verweilzeit der Pellets auf der Fließrinne, und somit von deren Länge ab. Um auch bei sich ändernden Wärmekapazitäten und Volumina der zu gefrierenden Massen ausreichende Verweilzeiten der Pellets auf der Fließrinne gewährleisten zu können, ist deren Länge großzügig zu bemessen, so dass die bekannte Vorrichtung eine relativ große Baulänge aufweist. Ansonsten besteht die Gefahr, dass noch nicht ausreichend angefrorene Pellets durch Kontakt mit dem Förderband deformiert werden.

Der Erfindung liegt die Aufgabe zugrunde, ein einfaches und kostensparendes Verfahren für die reproduzierbare Herstellung von Pellets anzugeben, bei dem die Gefahr einer Deformierung vermindert ist, und eine einfache und kompakte Vorrichtung für die Durchführung des Verfahrens bereitzustellen.

Hinsichtlich der Vorrichtung wird diese Aufgabe ausgehend von der eingangs genannten Vorrichtung erfindungsgemäß dadurch gelöst, dass der Leitkörper einen vorderen, für das Kühlmittel undurchlässigen Längenabschnitt, und einen hinteren, für das Kühlmittel jedoch nicht für die Pellets durchlässigen Längenabschnitt aufweist, wobei zwischen dem hinteren Längenabschnitt und dem Kühlmittelbad eine fluidische Verbindung besteht. Der durchlässige Längenabschnitt ist zur Horizontalen geneigt und oberhalb einer Transportvorrichtung angeordnet.

Das flüssige Kühlmittel fließt über den hinteren, durchlässigen Längenabschnitt des Leitkörpers ab, während die Pellets weiterhin auf dem Leitkörper transportiert werden. Dadurch, dass zwischen dem hinteren Längenabschnitt und dem Kühlmittelbad eine fluidische Verbindung besteht, gelangt das flüssige Kühlmittel in das Kühlmittelbad. Das flüssige Kühlmittel kann dabei direkt in das Kühlmittelbad abfließen. Auf eine zusätzlich Rückführeinrichtung für die Rückführung des flüssigen Kühlmittels in das Kühlmittelbad kann somit verzichtet werden. Da die Kühlflüssigkeit bereits vom Leitkörper abfließt, ist in jedem Fall eine gegenüber der bekannten Vorrichtung verkürzte Rückführeinrichtung einsetzbar.

Aufgrund des porösen Längenabschnitts der Leitkörpers erfolgt die Trennung von Kühlflüssigkeit und Pellets bereits vor der Transportvorrichtung. Dies ermöglicht eine sehr kompakte Anordnung, bei welcher der Leitkörper vollständig oberhalb der Transportvorrichtung angeordnet ist.

Bei dem Leitkörper handelt es sich beispielsweise um eine Wanne, eine Pelletierrinne oder eine im Bereich der Eintragvorrichtung nach oben offene Rohrleitung. Um einen Transport der Pellets auf dem Leitkörper aufgrund der Schwerkraft zu gewährleisten, ist es erforderlich, dass mindestens ein Längenabschnitt des Leitkörpers ein Gefälle aufweist.

Als besonders einfach und kostengünstig herstellbar erweist sich ein Leitkörper, bei dem der hintere Längenabschnitt in Form eines Netzes, Gitters oder Siebes ausgebildet ist, oder der aus einem porösen Material hergestellt ist.

Eine besonders kompakte Bauweise ergibt sich, wenn der hintere Längenabschnitt des Leitkörpers oberhalb des Kühlmittelbades beginnt. Dabei fließt das Kühlmittel direkt in das Kühlmittelbad ab, so dass auf eine Rückführeinrichtung vollständig verzichtet werden kann.

In einer bevorzugten Ausführungsform ist der Leitkörper aus mehreren fluidisch miteinander verbundenen Leitelementen zusammengesetzt, die mindestens teilweise zickzackförmig oder wendelförmig übereinander verlaufen. Durch die Zick-Zack- oder Wendelform ergibt sich eine besonders kompakte Bauweise.

Im Hinblick hierauf hat es sich auch als vorteilhaft erwiesen, das Kühlmittelbad oberhalb der Transportvorrichtung anzuordnen. Dies wird dadurch ermöglicht, dass das flüssige Kühlmittel zunächst - weiter oben - vom Leitkörper in das Kühlmittelbad abfließt und erst danach - weiter unten - die Pellets auf die Transportvorrichtung gelangen. Für die dadurch realisierbare kompaktere Bauweise ist es nicht erforderlich, das sich die Transportvorrichtung unterhalb des Kühlmittelbades erstreckt.

Zweckmäßigerweise sind mehrere Module, umfassend eine Strömungserzeugungseinrichtung eine Eintragvorrichtung, mindestens einen Leitkörper und ein Kühlmittelbad, entlang einer durch die Transportvorrichtung vorgegebenen Transportrichtung hintereinander angeordnet. Dies erlaubt eine Steigerung des Durchsatzes auf kleinem Raum, indem die Module parallel betrieben werden, wobei für alle Module nur eine Transportvorrichtung erforderlich ist. Die kompakte Bauweise der Vorrichtung wird dadurch erreicht, dass die Module in Transportrichtung oberhalb der gemeinsamen Transportvorrichtung angeordnet werden können. Die Anordnung der Module und die Transportrichtung verlaufen somit parallel, wobei es jedoch nicht erforderlich ist, dass die Module auf gleicher Höhe oder in einer geraden Linie zueinander angeordnet sind.

Hinsichtlich des Verfahrens wird die oben genannte Aufgabe ausgehend von dem Verfahren der eingangs genannten Gattung erfindungsgemäß dadurch gelöst, dass ein Leitkörper eingesetzt wird, der einen vorderen, für das Kühlmittel undurchlässigen Längenabschnitt, und einen hinteren, für das Kühlmittel jedoch nicht für die Pellets durchlässigen Längenabschnitt aufweist, wobei der die Pellets enthaltende Kühlstrom über den hinteren Längenabschnitt in ein Kühlmittelbad abgeleitet wird. Der durchlässige Längenabschnitt ist zur Horizontale geneigt und oberhalb einer Transportvorrichtung angeordnet.

Das flüssige Kühlmittel fließt über den hinteren, durchlässigen Längenabschnitt des Leitkörpers ab, während die Pellets weiterhin auf dem Leitkörper transportiert werden. Dadurch, dass zwischen dem hinteren Längenabschnitt und dem Kühlmittelbad eine fluidische Verbindung besteht, gelangt das flüssige Kühlmittel in das Kühlmittelbad. Das flüssige Kühlmittel kann dabei direkt in das Kühlmittelbad abfließen. Auf eine zusätzlich Rückführeinrichtung für die Rückführung des flüssigen Kühlmittels in das Kühlmittelbad kann somit verzichtet werden. Da die Kühlflüssigkeit bereits vom Leitkörper abfließt, ist in jedem Fall eine gegenüber der bekannten Vorrichtung verkürzte Rückführeinrichtung einsetzbar.

Als besonders günstig hat sich eine Verfahrensweise erwiesen, bei der ein aus mehreren fluidisch miteinander verbundenen Leitelementen zusammengesetzter Leitkörper eingesetzt wird, wobei die Leitelemente mindestens teilweise zickzackförmig oder wendelförmig übereinander verlaufen.

Die angefrorenen Pellets gelangen schließlich auf eine Transportvorrichtung, auf der sie nach außen transportiert und währenddessen vollständig ausgefroren werden.

Mittels des erfindungsgemäßen Verfahrens können beispielsweise Soßen, Dessertprodukte oder Eiscreme pelletiert werden. Vorzugsweise wird als zu pelletierende Masse jedoch Fruchtsaft eingesetzt.

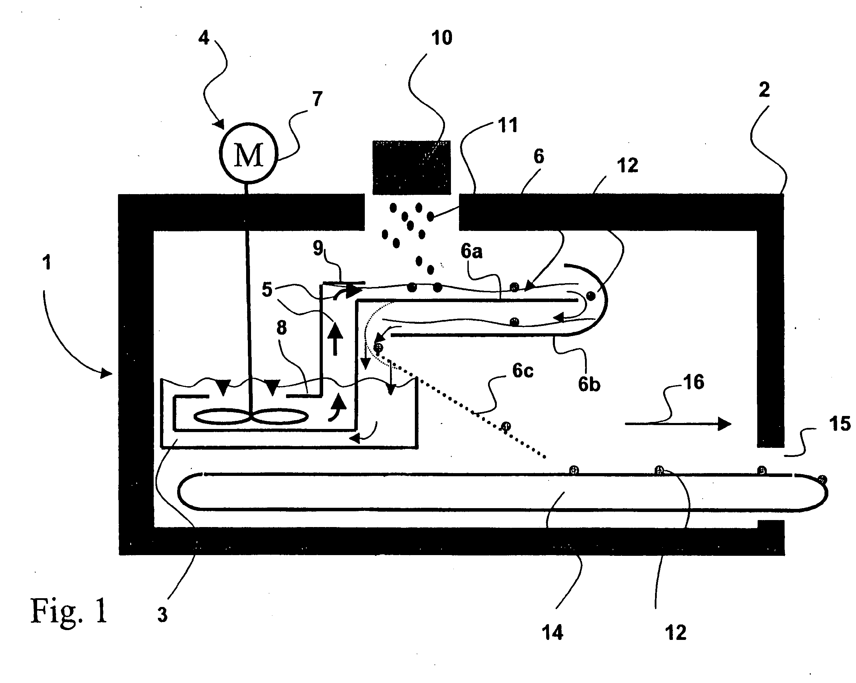

Nachfolgend wird die Erfindung anhand eines Ausführungsbeispiels und einer Zeichnung näher erläutert. In schematischer Darstellung zeigt
- **Figur 1**: in einer Seitenansicht eine Ausführungsform der erfindungsgemäßen Vorrichtung zur Herstellung von Fruchtsaftkügelchen.

Bei der Vorrichtung gemäß **Figur 1** ist der Pelletiervorrichtung insgesamt die Bezugsziffer 1 zugeordnet. Die Pelletiervorrichtung 1 weist ein wärmeisolierendes Gehäuse 2 auf, das ein Kühlmittelbad 3 aus Flüssigstickstoff umgibt. Mittels einer Flüssigpumpe, der insgesamt die Bezugsziffer 4 zugeordnet ist, wird kontinuierlich ein Kühlstrom (durch die Richtungspfeile 5 symbolisiert) aus Flüssigstickstoff auf eine Pelletierrinne 6 geleitet. Die Flüssigpumpe 4 besteht aus einer Antriebseinheit 7 mit Motor und Welle und einem Gehäuse, das eine im Kühlmittelbad 3 angeordnete Kühlmittelansaugöffnung 8 und einen oberhalb der Pelletierrinne 6 endenden Kühlmittelaustritt 9 aufweist.

Die Pelletierrinne 6 setzt sich aus mehreren Teilrinnen 6a, 6b, 6c zusammen, die fluidisch derart miteinander verbunden sind, dass der Kühlstrom 5 von der oberen Teilrinne 6a zur mittleren Teilrinne 6b und zur unteren Teilrinne 6 c abfließt. Die obere Teilrinne 6a und die mittlere Teilrinne 6b verlaufen im wesentlichen horizontal, während die untere Teilrinne 6c zur Horizontalen geneigt ist. Der Rinnenbereich der oberen Teilrinne 6a und der mittleren Teilrinne 6b ist für die Kühlflüssigkeit undurchlässig, während die untere Teilrinne 6c als poröse Halbschale mit netzförmiger, flüssigkeitsdurchlässiger Struktur ausgebildet ist. Das obere Ende der unteren Teilrinne 6c erstreckt sich über das Kühlmittelbad 3.

Oberhalb der oberen Teilrinne 6a ist eine Eintropfvorrichtung 10 vorgesehen, mittels der flüssige oder pastöse Fruchtsaft-Masse 11 in den Kühlstrom 5 eingetropft wird. Im Kühlstrom 5 gefriert die tropfenförmige Fruchtsaft-Masse 11 unter Bildung von Fruchtsaftkügelchen 12, die vom Kühlstrom 5 mitgenommen werden.

Der Kühlstrom 5 fließt mitsamt den teilweise gefrorenen Fruchtsaftkügelchen 10 über die Teilrinnen 6a, 6b und 6c. Über die poröse untere Teilrinne 6c fließt der Kühlstrom 5 in das Kühlbad 3 ab, wie dies die Richtungspfeile andeuten, während die Fruchtsaftkügelchen 12 mittels der unteren Teilrinne 6c einem Transportband 14 zugeführt und mittels diesem in Transportrichtung 16 zu einem Auslass 15 transportiert werden. Dort werden die Fruchtsaftkügelchen 12 in einen (in der Figur nicht dargestellten) Sammelbehälter befördert.

Nachfolgend wird das erfindungsgemäße Verfahren anhand eines Ausführungsbeispiels und anhand der Darstellung der Vorrichtung in Figur 1 näher erläutert.

Das Kühlmittelbad 3 aus kälteverflüssigtem Stickstoff (LN₂) hat eine Temperatur von - 196 °C. Mittels der Flüssigpumpe 4 wird auf der Pelletierrinne 6 der Kühlstrom 5 erzeugt. Die mittlere Strömungsgeschwindigkeit des Kühlstroms 5 liegt um 0,5 m/s. Die Fruchtsaft-Masse 10 wird in den Kühlstrom 5 eingetropft und mit diesem zur unteren, porösen Teilrinne 6c geleitet. Unter Berücksichtigung der Länge der Pelletierrinne 6 ergibt sich bis dahin eine mittlere Verweilzeit der eingetropften Fruchtsaftkügelchen 12 im flüssigen Kühlstrom 5 von ca. 6 Sekunden. Diese Behandlung führt zu einem oberflächlichen Anfrieren der Fruchtsaftkügelchen 12, deren Masse bei einem Durchmesser ca. 6 mm jeweils etwa 0,1g beträgt.

Im oberen Bereich der unteren Teilrinne 6 werden die Fruchtsaftkügelchen 12vom Kühlstrom 5 abgetrennt, indem dieser in das Kühlmittelbad 3 abfließt. Auf Ihrem weiteren Weg zum Transportband 14 und von dort zum Auslass 15 gefrieren die Fruchtsaftkügelchen 12 unter der Einwirkung der kalten Atmosphäre vollständig aus.

## Patentansprüche

1. Vorrichtung zum Pelletieren einer flüssigen oder pastösen Masse unter Einsatz eines Kühlstroms aus flüssigem Kühlmittel, mit einer Strömungserzeugungseinrichtung (4) zur Erzeugung des Kühlstroms (5), mit einer Eintragvorrichtung (10) zum Einbringen der Masse (11) in den Kühlstrom (5) im Bereich einer Eintropfstelle unter Bildung zu gefrierender Pellets (12), mit mindestens einem Leitkörper (6) zur Führung des die Pellets (12) enthaltenden Kühlstroms (5) zwischen der Eintropfstelle und einer Transportvorrichtung (14), und mit einem Kühlmittelbad (3) für das flüssige Kühlmittel, **dadurch gekennzeichnet, dass** der Leitkörper (6) einen vorderen, für das Kühlmittel undurchlässigen Längenabschnitt (6a, 6b), und einen hinteren, für das Kühlmittel jedoch nicht für die Pellets (12) durchlässigen Längenabschnitt (6c) aufweist, wobei zwischen dem hinteren Längenabschnitt (6c) und dem Kühlmittelbad (3) eine fluidische Verbindung besteht, der durchlässige Längenabschnitt (6c) zur Horizontalen geneigt und oberhalb der Transportvorrichtung (14) angeordnet ist.

2. Vorrichtung nach Anspruch 1, **dadurch gekennzeichnet, dass** der hintere Längenabschnitt (6c) des Leitkörpers (6) in Form eines Netzes, Gitters oder Siebes ausgebildet, oder aus einem porösen Material hergestellt ist.

3. Vorrichtung nach Anspruch 1 oder 2, **dadurch gekennzeichnet, dass** der hintere Längenabschnitt (6c) des Leitkörpers (6) oberhalb des Kühlmittelbads (3) beginnt.

4. Vorrichtung nach einem der Ansprüche 1 bis 3, **dadurch gekennzeichnet, dass** der Leitkörper (6) aus mehreren fluidisch miteinander verbundenen Leitelementen (6a, 6b, 6c) zusammengesetzt ist, die mindestens teilweise zickzackförmig oder wendelförmig übereinander verlaufen.

5. Vorrichtung nach einem der Ansprüche 1 bis 4, **dadurch gekennzeichnet, dass** die Transportvorrichtung (14) unterhalb des Kühlmittelbades (3) angeordnet ist.

6. Vorrichtung nach einem der Ansprüche 1 bis 5, **dadurch gekennzeichnet, dass** mehrere Module, umfassend eine Strömungserzeugungseinrichtung (4) eine Eintragvorrichtung (10), mindestens einen Leitkörper (6) und ein Kühlmittelbad (3), entlang einer durch die Transportvorrichtung (14) vorgegebenen Transportrichtung (16) hintereinander angeordnet sind.

7. Verfahren zur Herstellung von Pellets aus einer flüssigen oder pastösen Masse, indem ein mittels mindestens eines Leitkörpers (6) geführter Kühlstrom (5) eines flüssigen Kühlmittels erzeugt, die Masse (11) in den Kühlstrom (5) eingebracht und darin unter Bildung von Pellets (12) teilweise ausgefroren wird, und die Pellets (12) anschließend vom Leitkörper (6) entfernt, einer Transportvorrichtung (14) zugeführt und darauf ausgefroren werden, **dadurch gekennzeichnet, dass** ein Leitkörper (6) eingesetzt wird, der einen vorderen, für das Kühlmittel undurchlässigen Längenabschnitt (6a, 6b), und einen hinteren, für das Kühlmittel jedoch nicht für die Pellets durchlässigen Längenabschnitt (6c) aufweist und der Längenabschnitt (6c) zur Horizontalen geneigt und oberhalb der Transportvorrichtung (14) angeordnet ist, wobei der die Pellets (12) enthaltende Kühlstrom (5) über den hinteren Längenabschnitt (6c) in ein Kühlmittelbad (3) abgeleitet wird.

8. Verfahren nach Anspruch 7, **dadurch gekennzeichnet, dass** ein aus mehreren fluidisch miteinander verbundenen Leitelementen (6a, 6b, 6c) zusammengesetzter Leitkörper (6) eingesetzt wird, wobei die Leitelemente (6a, 6b, 6c) mindestens teilweise zickzackförmig oder wendelförmig übereinander verlaufen.

9. Verfahren nach Anspruch 7 oder 8, **dadurch gekennzeichnet, dass** als zu pelletierende Masse eine Fruchtsaft-Masse eingesetzt wird.

## Claims

1. Apparatus for pelletizing a liquid or pasty mass using a cooling stream of liquid coolant, with a flow-generating device (4) for generating the cooling stream (5), with a feed device (10) for introducing the mass (11) into the cooling stream (5) in the region of a drop-in point so as to form pellets (12) to be frozen, with at least one guide body (6) for routing the cooling stream (5) containing the pellets (12) between the drop-in point and a transport device (14), and with a coolant bath (3) for the liquid coolant, **characterized in that** the guide body (6) has a front length portion (6a, 6b) impermeable to the coolant and a rear length portion (6c) permeable to the coolant, but not to the pellets (12), a fluidic connection between the rear length portion (6c) and the coolant bath (3) being present, and the permeable length portion (6c) being inclined to the horizontal and being arranged above the transport device (14).

2. Apparatus according to Claim 1, **characterized in that** the rear length portion (6c) of the guide body (6) is designed in the form of a net, grid or screen or is produced from a porous material.

3. Apparatus according to Claim 1 or 2, **characterized in that** the rear length portion (6c) of the guide body (6) commences above the coolant bath (3).

4. Apparatus according to one of Claims 1 to 3, **characterized in that** the guide body (6) is composed of a plurality of guide elements (6a, 6b, 6c) which are connected fluidically to one another and which at least partially run in a zigzag-shaped manner or helically one above the other.

5. Apparatus according to one of Claims 1 to 4, **characterized in that** the transport device (14) is arranged below the coolant bath (3).

6. Apparatus according to one of Claims 1 to 5, **characterized in that** a plurality of modules comprising a flow-generating device (4), a feed device (10), at least one guide body (6) and a coolant bath (3) are arranged one behind the other along a transport direction (16) predetermined by the transport device (14).

7. Method for producing pellets from a liquid or pasty mass, in that a cooling stream (5) of a liquid coolant, routed by means of at least one guide body (6), is generated, the mass (11) is introduced into the cooling stream (5) and is partially frozen therein so as to form pellets (12), and the pellets (12) are subsequently removed from the guide body (6), delivered to a transport device (14) and frozen on this, **characterized in that** a guide body (6) is used which has a front length portion (6a, 6b) impermeable to the coolant and a rear length portion (6c) permeable to the coolant, but not to the pellets, and the length portion (6c) is inclined to the horizontal and is arranged above the transport device (14), the cooling stream (5) which contains the pellets (12) being diverted into a coolant bath (3) via the rear length portion (6c).

8. Method according to Claim 7, **characterized in that** a guide body (6) composed of a plurality of guide elements (6a, 6b, 6c) connected fluidically to one another is used, the guide elements (6a, 6b, 6c) at least partially running in a zigzag-shaped manner or helically one above the other.

9. Method according to Claim 7 or 8, **characterized in that** a fruit juice mass is used as the mass to be pelletized.

## Revendications

1. Dispositif de granulation d'une matière liquide ou pâteuse avec un courant de liquide de refroidissement provenant d'un milieu de refroidissement liquide, comportant un dispositif de génération d'écoulement (4) pour générer le courant de liquide de refroidissement (5), comportant un dispositif d'alimentation (10) pour introduire la matière (11) dans le courant de liquide de refroidissement (5) au niveau d'un emplacement d'égouttement de façon à former un granulé (12) à geler, comportant au moins un corps conducteur (6) pour guider le courant de liquide de refroidissement (5) contenant le granulé (12) entre l'emplacement d'égouttement et un dispositif de transport (14), et comportant un bain de milieu de refroidissement (3) pour le milieu de refroidissement liquide, **caractérisé en ce que** le corps conducteur (6) présente une portion longitudinale (6a,6b) avant, imperméable au milieu de refroidissement et une portion longitudinale (6c) arrière, perméable au milieu de refroidissement mais néanmoins imperméable au granulé (12), dans lequel entre la section longitudinale arrière (6c) et le bain de milieu de refroidissement (3), une liaison fluide est constituée, et la section longitudinale perméable (6c) est inclinée par rapport à l'horizontale et disposée au dessus du dispositif de transport (14).

2. Dispositif selon la revendication 1, **caractérisé en ce que** la portion longitudinale arrière (6c) du corps conducteur (6) est configurée sous la forme d'un filet, une grille ou un tamis maillé, ou est faite d'un matériau poreux.

3. Dispositif selon la revendication 1 ou 2, **caractérisé en ce que** la portion longitudinale arrière (6c) du corps conducteur (6) commence au dessus du bain de milieu de refroidissement (3).

4. Dispositif selon une des revendications 1 à 3, **caractérisé en ce que** le corps conducteur (6) est composé de plusieurs éléments conducteurs (6a,6b,6c) reliés fluidiquement les uns aux autres, qui s'étendent au moins partiellement les uns sur les autres en forme de zig-zag ou de spirale.

5. Dispositif selon une des revendications 1 à 4, **caractérisé en ce que** le dispositif de transport (14) est disposé en dessous du bain de milieu de refroidissement (3).

6. Dispositif selon une des revendications 1 à 5, **caractérisé en ce que** plusieurs modules, comprenant un dispositif de génération d'écoulement (4), un dispositif d'alimentation (10), au moins un corps conducteur (6) et un bain de milieu de refroidissement (3), sont disposés les uns derrière les autres le long d'une direction de transport (16) prescrite à travers le dispositif de transport (14).

7. Procédé de fabrication de granulés à partir d'une matière liquide ou pâteuse, dans lequel un courant de liquide de refroidissement (5) d'un milieu de refroidissement liquide guidé au moyen d'au moins un corps conducteur (6) est généré, la matière (11) est amenée dans le courant de liquide de refroidissement (5) et y est partiellement gelée de façon à former des granulés (12), et les granulés (12) sont ensuite retirés du corps conducteur (6), introduits dans un dispositif de transport (14) et sont dégelés sur celui-ci, **caractérisé en ce qu'**un corps conducteur (6) est employé, celui-ci présentant une portion longitudinale (6a,6b) avant, imperméable au milieu de refroidissement et une portion longitudinale (6c) arrière, perméable au milieu de refroidissement mais néanmoins imperméable au granulé et la portion longitudinale (6c) est inclinée par rapport à l'horizontale et disposée au dessus du dispositif de transport (14), dans lequel le courant de liquide de refroidissement (5) contenant les granulés (12) est dévié sur la portion longitudinale arrière (6c) dans un bain de milieu de refroidissement (3).

8. Procédé selon la revendication 7, **caractérisé en ce qu'**un corps conducteur (6) composé de plusieurs éléments conducteurs (6a,6b,6c) reliés fluidiquement les uns aux autres est employé, dans lequel les éléments conducteurs (6a,6b,6c) s'étendent au moins partiellement les uns sur les autres en forme de zig-zag ou de spirale.

9. Procédé selon la revendication 7 ou 8, **caractérisé en ce que** comme matière à granuler, on emploie une masse de jus de fruit.
